# EUROPÄISCHE PATENTSCHRIFT

(11) **EP 3 871 036 B1**
(45) Veröffentlichungstag und Bekanntmachung des Hinweises auf die Patenterteilung: **16.04.2025**
(21) Anmeldenummer: 19782627.4
(22) Anmeldetag: 09.10.2019
(51) Int. Cl.: G02B 27/01, G02B 5/08, G02B 5/30

(54) **PROJEKTIONSANORDNUNG FÜR EIN FAHRZEUG, UMFASSEND EINE SEITENSCHEIBE**
PROJECTION DEVICE FOR A VEHICLE, COMPRISING A SIDE WINDOW
DISPOSITIF DE PROJECTION POUR UN VÉHICULE COMPRENANT UNE VITRE LATÉRALE

(30) Priorität: 24.10.2018 EP 18202219
(43) Veröffentlichungstag der Anmeldung: 01.09.2021
(73) Patentinhaber: Saint-Gobain Glass France, 92400 Courbevoie (FR)
(72) Erfinder: FISCHER, Klaus, 52477 Alsdorf (DE); SCHAEFER, Dagmar, 52134 Herzogenrath (DE); ZIMMERMANN, Roberto, 42653 Solingen (DE)
(74) Vertreter: Feist, Florian Arno
(86) Internationale Anmeldenummer: PCT/EP2019/077362
(87) Internationale Veröffentlichungsnummer: WO 2020/083649

(56) Entgegenhaltungen:
- EP-A2- 0 836 108
- EP-A2- 3 187 917
- CN-A- 104 267 498
- US-A1- 2004 135 742
- US-A1- 2006 023 315

## Beschreibung

Die Erfindung betrifft eine Projektionsanordnung für ein Fahrzeug, insbesondere vorgesehen als Entertainment-System, und die Verwendung einer Fahrzeug-Seitenscheibe für eine solche Projektionsanordnung.

Entertainment-Systeme für Kraftfahrzeuge finden zunehmend Verbreitung. Dabei ist es üblich, die Rückseiten der Vordersitze mit Bildschirmen zu versehen, auf denen die hinteren Fahrzeuginsassen beispielsweise Filme ansehen oder sich mit Computerspielen beschäftigen können.

Projektionsanordnungen unter Verwendung der Fensterscheiben sind im Fahrzeugbereich als sogenannte Head-Up-Displays (HUDs) gebräuchlich. Dabei werden mit einem Projektor, Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen.

Verwenden die Projektoren s-polarisierte Strahlung, so wird diese an beiden externen Oberflächen der Windschutzscheibe reflektiert. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt.

Alternativ können auch Projektoren mit p-polarisierter Strahlung verwendet werden. Liegt der Einstrahlwinkel nahe dem Brewsterwinkel, so wird p-polarisierte Strahlung nicht von den Oberflächen der Windschutzscheibe reflektiert, so dass die Problematik des Geisterbilds vermieden wird. Stattdessen weisen die Windschutzscheiben eine reflektierende Beschichtung auf, mittels derer das Projektionsbild erzeugt wird. Ein solches HUD ist beispielsweise aus DE 10 2014 220 189 A1 bekannt.

Es ist auch bekannt, Fahrzeugscheiben mit transparenten, elektrisch leitfähigen Beschichtungen zu versehen. Diese Beschichtungen können als IR-reflektierende Beschichtungen wirken, um die Erwärmung des Fahrzeuginnenraums zu verringern und dadurch den thermischen Komfort zu verbessern. Die Beschichtungen können aber auch als beheizbare Beschichtungen verwendet werden, indem sie mit einer Spannungsquelle verbunden werden, so dass ein Strom durch die Beschichtung fließt. Geeignete Beschichtungen enthalten leifähige, metallische Schichten beispielsweise auf Basis von Silber oder Aluminium. Diese Beschichtungen können prinzipiell zur Reflexion von p-polarisierter Strahlung verwendet werden, um ein HUD-Projektionsbild zu erzeugen. Da für Windschutzscheiben hohe gesetzliche Anforderungen hinsichtlich der Transparenz bestehen, sind die elektrisch leitfähigen Beschichtungen als komplexe Dünnschichtstapel ausgebildet, so dass neben den reflektierenden Eigenschaften insbesondere im IR-Bereich eine hohe Transmission im sichtbaren Spektralbereich sichergestellt wird. Silberhaltige transparente Beschichtungen sind beispielsweise bekannt aus WO 03/024155, US 2007/0082219 A1, US 2007/0020465 A1, WO2013/104438 oder WO2013/104439.

CN 104 267 498 A offenbart eine Projektionsanordnung, umfassend eine Windschutzscheibe und einen Projektor, welcher die Windschutzscheibe mit p-polarisierter Strahlung bestrahlt. Die Windschutzscheibe weist eine Reflexionsbeschichtung auf, welche alternierend optisch hochbrechende Schichten und optisch niedrigbrechende Schichten umfasst.

EP 3 187 917 A2 offenbart eine derartige Projektionsanordnung, wobei die Reflexionsbeschichtung Silberschichten und optisch hochbrechende dielektrische Schichten umfasst.

US 2006/023315 A1 offenbart eine Projektionsanordnung, umfassend eine Fahrzeugscheibe, welche eine Seitenscheibe sein kann. Die Fahrzeugscheibe wird durch einen Projektor mit s-polarisierter Strahlung bestrahlt. Die Strahlung wird durch eine polarisationsändernde Schicht in p-polarisierte Strahlung gewandelt, welche dann an einer reflektierenden Schicht reflektiert wird.

Der Erfindung liegt die Aufgabe zugrunde, eine Projektionsanordnung für ein Fahrzeug bereitzustellen, die insbesondere als Entertainment-System für die hinteren Fahrzeuginsassen verwendet werden kann. Die Projektionsanordnung soll dabei möglichst kostengünstig herstellbar sein und beim Betrachter einen außergewöhnlichen Eindruck erzeugen.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Die erfindungsgemäße Projektionsanordnung für ein Fahrzeug umfasst mindestens eine Fahrzeug-Seitenscheibe, die mit einer Reflexionsbeschichtung ausgestattet ist, und einen Projektor. Der Projektor ist innenraumseitig der Seitenscheibe angeordnet, ist auf einen Bereich der Seitenscheibe gerichtet und bestrahlt diesen Bereich. Mit dem Projektor wird ein virtuelles, hinter der Seitenscheibe wahrnehmbares Bild erzeugt. Der Projektor verwendet dabei p-polarisierte Strahlung, die von den Oberflächen der Seitenscheibe nicht wesentlich reflektiert wird, wenn der Einstrahlwinkel nahe dem Brewsterwinkel für einen Luft-Glas-Übergang (57,2°, Kalk-Natron-Glas) gewählt ist. Dadurch können Doppelreflexionen vermieden werden und auf die Verwendung einer keilartigen Zwischenschicht verzichtet werden, was die Herstellung der Seitenscheibe vereinfacht und kostengünstiger gestaltet. Die Reflexionsbeschichtung ist zur Reflexion der p-polarisierten Strahlung ausgelegt, um das Projektionsbild zu erzeugen. Da an die Transparenz der hinteren Seitenscheiben wesentlich geringere oder gar keine gesetzlichen Anforderungen gestellt werden, muss die Beschichtung keine hohe Transmission im sichtbaren Spektralbereich gewährleisten. Es können daher einfachere und weniger kostenintensive Beschichtungen verwendet werden als beispielsweise im Falle von Windschutzscheiben. Die Projektionsdarstellung als virtuelles Bild hinter der Seitenscheibe ermöglicht dem Betrachter ein außergewöhnliches Entertainment-Erlebnis. Das sind große Vorteile der vorliegenden Erfindung.

Die erfindungsgemäße Seitenscheibe ist dafür vorgesehen, in einer Fensteröffnung eines Fahrzeugs, insbesondere einer seitlichen Fensteröffnung, den Innenraum gegenüber der äußeren Umgebung abzutrennen. Die Seitenscheibe ist bevorzugt eine hintere Fahrzeug-Seitenscheibe (insbesondere eines Kraftfahrzeugs, beispielsweise eines Personen- oder Lastkraftwagens), also eine Seitenscheibe, die nicht dem Fahrer oder Beifahrer zugeordnet ist, sondern den hinteren Insassen des Fahrzeugs auf der Rückbank. Die Seitenscheibe umfasst zwei externe Oberflächen (Hauptflächen), die im Sinne der Erfindung als außenseitige und eine innenraumseitige Oberfläche bezeichnet werden, und eine dazwischen verlaufende, umlaufende Seitenkante. Mit außenseitiger Oberfläche wird im Sinne der Erfindung diejenige Oberfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein.

Die Fahrzeug-Seitenscheibe kann als monolithische Glas- oder Kunststoffscheibe ausgebildet sein, insbesondere als thermisch vorgespanntes Einscheibensicherheitsglas (ESG). Dann ist die Reflexionsbeschichtung bevorzugt auf der innenraumseitigen Oberfläche aufgebracht, wo sie geringeren mechanischen und korrosiven Belastungen ausgesetzt ist als auf der außenseitigen Oberfläche. In einer bevorzugten Ausgestaltung ist die Fahrzeug-Seitenscheibe aber als Verbundscheibe ausgestaltet. Die Verbundscheibe umfasst eine Außenscheibe und eine Innenscheibe, die über eine thermoplastische Zwischenschicht miteinander verbunden sind. Mit Innenscheibe wird im Sinne der Erfindung die dem Innenraum (insbesondere Fahrzeuginnenraum) zugewandte Scheibe der Verbundscheibe bezeichnet. Mit Außenscheibe wird die der äußeren Umgebung zugewandte Scheibe bezeichnet. Die Außenscheibe und die Innenscheibe weisen jeweils eine außenseitige Oberfläche, eine innenraumseitige Oberfläche und eine dazwischen verlaufende, umlaufende Seitenkante auf. Die innenraumseitige Oberfläche der Außenscheibe und die außenseitige Oberfläche der Innenscheibe sind einander zugewandt und durch die thermoplastische Zwischenschicht miteinander verbunden.

Ist die Seitenscheibe als Verbundscheibe ausgestaltet, so ist die Reflexionsbeschichtung bevorzugt auf einer der Zwischenschicht zugewandten Oberflächen der beiden Scheiben aufgebracht, also der innenraumseitigen Oberfläche der Außenscheibe oder der außenseitigen Oberfläche der Innenscheibe. Alternativ kann die Reflexionsbeschichtung auch innerhalb der thermoplastischen Zwischenschicht angeordnet sein, beispielsweise aufgebracht auf einer Trägerfolie, die zwischen zwei thermoplastischen Verbindefolien angeordnet ist. Zwischen den Scheiben ist die Reflexionsbeschichtung vor Korrosion, mechanischen Beschädigung und sonstigen Beeinträchtigungen geschützt. Das ist insbesondere dann besonders vorteilhaft, wenn die Reflexionsbeschichtung eine oder mehrere metallhaltige, beispielsweise silberhaltige Schichten umfasst, welche korrosionsanfällig sind und daher keinen Kontakt zur umgebenden Atmosphäre haben sollten.

Da die Reflexion der Projektorstrahlung im Wesentlichen an der Reflexionsbeschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Seitenscheibe sind daher bevorzugt im Wesentlichen parallel zueinander angeordnet. Ist die Seitenscheibe als Verbundscheibe ausgebildet, so ist die thermoplastische Zwischenschicht dazu bevorzugt nicht keilartig ausgebildet, sondern weist eine im Wesentlichen konstante Dicke auf, ebenso wie die Innenscheibe und die Außenscheibe. Eine keilartige Zwischenschicht würde dagegen im vertikalen Verlauf zwischen Unterkante und Oberkante der Seitenscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Seitenscheibe günstiger gestaltet.

Die Strahlung des Projektors ist überwiegend p-polarisiert. Der Einfallswinkel der Projektorstrahlung auf der Seitenscheibe beträgt bevorzugt von 45° bis 70°. In einer besonders vorteilhaften Ausgestaltung weicht der Einfallswinkel um höchstens 10° vom Brewsterwinkel ab. Die p-polarisierte Strahlung wird dann nur unwesentlich an den Oberflächen der Seitenscheibe reflektiert, so dass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Seitenscheibe) im geometrischen Zentrum des bestrahlten Bereichs der Seitenscheibe. Der Brewsterwinkel für einen Luft-Glas-Übergang im Falle von Kalk-Natron-Glas, das für Fensterscheiben allgemein üblich ist, beträgt 57,2°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Seitenscheibe. Der p-polarisierte Strahlungsanteil des Projektors beträgt bevorzugt mindestens 50%, besonders bevorzugt mindestens 70%, ganz besonders bevorzugt mindestens 80% und insbesondere mindestens 90%. In einer besonders vorteilhaften Ausgestaltung ist die Strahlung des Projektors im Wesentlichen rein p-polarisiert ist - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Seitenscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Seitenscheibe im geometrischen Zentrum des bestrahlten Bereichs aufgespannt.

Die Seitenscheibe ist erfindungsgemäß mit einer Reflexionsbeschichtung versehen, die zur Reflexion von p-polarisierter Strahlung geeignet ist. Die mit der Reflexionsbeschichtung versehene Seitenscheibe weist bevorzugt im Spektralbereich von 400 nm bis 650 nm, der für die Darstellung von Entertainment-Projektoren besonders interessant ist, einen gemittelten Reflexionsgrad gegenüber p-polarisierter Strahlung von mindestens 15% auf, besonders bevorzugt von mindestens 20%, ganz besonders bevorzugt von mindestens 25%. Damit wird ein hinreichend intensitätsstarkes Projektionsbild erzeugt. Hierbei wird der Reflexionsgrad gemessen mit einem Einfallswinkel von 65° zur innenraumseitigen Flächennormalen, was etwa der Bestrahlung durch übliche Projektoren entspricht.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum.

Um eine möglichst farbneutrale Darstellung des Projektorbildes zu erreichen, sollte das Reflexionsspektrum möglichst glatt sein und keine ausgeprägten lokalen Minima und Maxima ausweisen. Abweichungen am Rande des interessanten Spektralbereichs von 400 nm bis 650 nm sind weniger störend und können akzeptiert werden, aber im Spektralbereich von 450 nm bis 600 nm sollte die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades in einer bevorzugten Ausgestaltung höchstens 7 % betragen, besonders bevorzugt höchstens 3 %, ganz besonders bevorzugt höchstens 2,5 %. Auch hier ist wieder der Reflexionsgrad gegenüber p-polarisierter Strahlung gemessen mit einem Einfallswinkel von 65° zur innenraumseitigen Flächennormalen heranzuziehen. In einer besonders vorteilhaften Ausgestaltung gelten die vorstehend genannten bevorzugten Werte für den Spektralbereich von 420 nm bis 600 nm, anstatt nur von 450 nm bis 600 nm.

Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Bevorzugt sind mindestens 80% der Scheibenoberfläche mit der erfindungsgemäßen Reflexionsbeschichtung versehen. Insbesondere ist die Reflexionsbeschichtung vollflächig auf die Scheibenoberfläche aufgebracht, optional mit Ausnahme eines umlaufenden Randbereichs und/oder lokaler Bereiche, die als Kommunikations-, Sensor- oder Kamerafenster die Transmission von elektromagnetischer Strahlung durch die Verbundscheibe gewährleisten sollen und daher nicht mit der Beschichtung versehen sind. Der umlaufende unbeschichtete Randbereich weist beispielsweise eine Breite von bis zu 20 cm auf. Er verhindert den direkten Kontakt der Beschichtung zur umgebenden Atmosphäre, so dass die Beschichtung im Innern der Verbundscheibe vor Korrosion und Beschädigung geschützt ist. Ein unbeschichteter umlaufender Randbereich und etwaige Kommunikationsfenster sind besonders dann sinnvoll, wenn die Reflexionsbeschichtung elektrisch leitfähige, metallhaltige Schichten umfasst.

Die Reflexionsbeschichtung ist bevorzugt ein Dünnschichtstapel, also eine Schichtenfolge dünner Einzelschichten. Die Schichtenfolge umfasst alternierend Schichten mit hohem Brechungsindex und niedrigem Brechungsindex. Durch geeignete Wahl der Materialien und Schichtdicken kann das Reflexionsverhalten einer solchen Schichtenfolge infolge von Interferenzeffekten gezielt eingestellt werden. So ist es möglich, eine Reflexionsbeschichtung zu realisieren mit effektiver Reflexion gegenüber p-polarisierter Strahlung im sichtbaren Spektralbereich. Die Schichten mit hohem Brechungsindex (optisch hochbrechende Schichten) weisen einen Brechungsindex von größer 1,8 auf. Die Schichten mit niedrigem Brechungsindex (optisch niedrigbrechende Schichten) weisen einen Brechungsindex von kleiner 1,8 auf. Die oberste und die unterste Schicht des Dünnschichtstapels sind bevorzugt optisch hochbrechende Schichten.

In einer Ausgestaltung (nicht beansprucht) sind alle hoch- und niedrigbrechenden Schichten, insbesondere sämtliche Schichten der Reflexionsbeschichtung, als dielektrische Schichten ausgebildet. Die optisch hochbrechenden Schichten sind bevorzugt auf Basis von Siliziumnitrid, Zinn-Zink-Oxid, Silizium-Zirkonium-Nitrid oder Titanoxid ausgebildet, besonders bevorzugt auf Basis von Siliziumnitrid. Die optisch niedrigbrechenden Schichten sind bevorzugt auf Basis von Siliziumoxid ausgebildet. Weitere Materialien, auf deren Basis die optisch hochbrechenden Schichten ausgebildet sein können, sind Zirkoniumoxid, Nioboxid, Hafniumoxid, Tantaloxid, Wolframoxid, Siliziumkarbid oder Diamond-like carbon (DLC). Weitere Materialien, auf deren Basis die optisch niedrigbrechenden Schichten ausgebildet sein können, sind Aluminiumoxid, Magnesiumfluorit, Siliziumoxinitrid oder Calciumfluorit. Die Gesamtzahl hoch- und niedrigbrechender Schichten beträgt bevorzugt von 8 bis 15. Damit ist eine geeignete Gestaltung der Reflexionseigenschaften möglich, ohne den Schichtaufbau zu komplex zu gestalten.

Die Schichtdicken der dielektrischen Schichten sollten bevorzugt von 30 nm bis 500 nm betragen, besonders bevorzugt von 50 nm bis 300 nm.

Ist eine Schicht auf Basis eines Materials ausgebildet, so besteht die Schicht mehrheitlich aus diesem Material neben etwaigen Verunreinigungen oder Dotierungen.

Erfindungsgemäß umfasst die Reflexionsbeschichtung außer den dielektrischen Schichten mindestens eine elektrisch leitfähige Schicht, insbesondere metallhaltige Schicht. Bevorzugt umfasst die Reflexionsbeschichtung genau eine elektrisch leitfähige Schicht. Es hat sich gezeigt, dass eine solche leitfähige Schicht geeignet ist, das Reflexionsspektrum der Reflexionsbeschichtung im sichtbaren Bereich zu glätten, so dass eine farbneutralere Darstellung des Projektorbildes erreicht wird. Außerdem wirken elektrisch leitfähige Schichten reflektierend auf IR-Strahlung, so dass der thermische Komfort verbessert wird, indem IR-Anteile der Sonnenstrahlung reflektiert werden und den Innenraum folglich weniger stark aufheizen können. Die Gesamtzahl hoch- und niedrigbrechender Schichten beträgt bevorzugt von 5 bis 10. Damit ist eine geeignete Gestaltung der Reflexionseigenschaften möglich, ohne den Schichtaufbau zu komplex zu gestalten. Die Anwesenheit der elektrisch leitfähigen Schicht verringert die Zahl nötiger Schichten, um zu einer geeigneten Gestaltung der Reflexionseigenschaften zu gelangen.

Erfindungsgemäß ist mindestens eine, insbesondere genau eine, der optisch niedrigbrechenden Schichten als metallhaltige Schicht ausgebildet, während die übrigen optisch hoch- und niedrigbrechenden Schichten als dielektrische Schichten ausgebildet sind. Die leitfähige Schicht ist dann zwischen zwei optisch hochbrechenden dielektrischen Schichten angeordnet, ohne dass eine optisch niedrigbrechende Schicht zwischen der leitfähigen Schicht und den besagten hochbrechenden Schichten angeordnet ist. Für die bevorzugten Materialien und Schichtdicken der dielektrischen Schichten gelten die vorstehenden Ausführungen.

Die elektrisch leitfähige Schicht ist bevorzugt auf Basis von Silber ausgebildet. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Alternativ können aber auch andere elektrisch leitfähige Materialien vorgesehen sein, beispielsweise Gold, Kupfer oder Aluminium, oder transparente leitfähige Oxide (TCO) wie Indium-Zinnoxid (ITO). Gebrächliche leitfähige Schichten auf Silberbasis weisen einen Brechungsindex von etwa 0,015 auf, sind also als optisch niedrigbrechende Schichten gut geeignet. Die Schichtdicke der leitfähigen Schicht beträgt bevorzugt von 5 nm bis 20 nm, besonders bevorzugt von 8 nm bis 12 nm.

Es ist allgemein bevorzugt, dass benachbarte hoch- und niedrigbrechende Schichten direkten Kontakt zueinander haben und keine weiteren Schichten dazwischen angeordnet sind.

In einer Ausgestaltung (nicht beansprucht) umfasst die Reflexionsbeschichtung die folgende Schichtenfolge ausgehend vom Substrat, auf dem die Beschichtung abgeschieden ist, folgende Schichten:
- eine optisch hochbrechende Schicht mit einer Dicke von 80 nm bis 100 nm, bevorzugt von 92 nm bis 95 nm,
- eine optisch niedrigbrechende Schicht mit einer Dicke von 40 nm bis 60 nm, bevorzugt von 50 nm bis 53 nm,
- eine optisch hochbrechende Schicht mit einer Dicke von 120 nm bis 140 nm, bevorzugt von 126 nm bis 129 nm,
- eine optisch niedrigbrechende Schicht mit einer Dicke von 100 nm bis 120 nm, bevorzugt von 106 nm bis 109 nm,
- eine optisch hochbrechende Schicht mit einer Dicke von 60 nm bis 80 nm, bevorzugt von 67 nm bis 70 nm,
- eine optisch niedrigbrechende Schicht mit einer Dicke von 100 nm bis 120 nm, bevorzugt von 120 nm bis 115 nm,
- eine optisch hochbrechende Schicht mit einer Dicke von 60 nm bis 80 nm, bevorzugt von 68 nm bis 71 nm,
- eine optisch niedrigbrechende Schicht mit einer Dicke von 100 nm bis 120 nm, bevorzugt von 107 nm bis 110 nm,
- eine optisch hochbrechende Schicht mit einer Dicke von 30 nm bis 50 nm, bevorzugt von 40 nm bis 43 nm,
- eine optisch niedrigbrechende mit einer Dicke von 50 nm bis 70 nm, bevorzugt von 60 nm bis 63 nm,
- eine optisch hochbrechende Schicht mit einer Dicke von 200 nm bis 220 nm, bevorzugt von 211 nm bis 214 nm.

Die optisch hochbrechenden Schichten weisen dabei einen Brechungsindex von größer 1,8 auf, die optisch niedrigbrechenden Schichten einen Brechungsindex von kleiner 1,8. Die Reflexionsbeschichtung besteht besonders bevorzugt aus den vorstehend genannten Schichten. Die optisch hochbrechenden und niedrigbrechenden Schichten sind bevorzugt dielektrische Schichten. Bevorzugte Materialien für die optisch hochbrechenden Schichten sind Siliziumnitrid, Zinn-Zink-Oxid, Silizium-Zirkonium-Nitrid, Zirkoniumoxid, Nioboxid, Hafniumoxid, Tantaloxid, Wolframoxid, Titanoxid, Siliziumkarbid oder Diamond-like carbon (DLC). Bevorzugte Materialen für die optisch niedrigbrechenden Schichten sind Siliziumoxid, Aluminiumoxid, Magnesiumfluorit, Siliziumoxinitrid oder Calciumfluorit. Die optisch hochbrechenden beziehungsweise niedrigbrechenden Schichten sind daher bevorzugt auf Basis dieser Materialien ausgebildet.

In einer Ausgestaltung (nicht beansprucht) umfasst die Reflexionsbeschichtung die folgende Schichtenfolge ausgehend vom Substrat, auf dem die Beschichtung abgeschieden ist, folgende Schichten:
- eine optisch hochbrechende Schicht auf Basis von Siliziumnitrid, Zinn-Zink-Oxid, Silizium-Zirkonium-Nitrid oder Titanoxid, bevorzugt Siliziumnitrid, mit einer Dicke von 80 nm bis 100 nm, bevorzugt von 92 nm bis 95 nm,
- eine optisch niedrigbrechende Schicht auf Basis von Siliziumdioxid mit einer Dicke von 40 nm bis 60 nm, bevorzugt von 50 nm bis 53 nm,
- eine optisch hochbrechende Schicht auf Basis von Siliziumnitrid, Zinn-Zink-Oxid, Silizium-Zirkonium-Nitrid oder Titanoxid, bevorzugt Siliziumnitrid, mit einer Dicke von 120 nm bis 140 nm, bevorzugt von 126 nm bis 129 nm,
- eine optisch niedrigbrechende Schicht auf Basis von Siliziumdioxid mit einer Dicke von 100 nm bis 120 nm, bevorzugt von 106 nm bis 109 nm,
- eine optisch hochbrechende Schicht auf Basis von Siliziumnitrid, Zinn-Zink-Oxid, Silizium-Zirkonium-Nitrid oder Titanoxid, bevorzugt Siliziumnitrid, mit einer Dicke von 60 nm bis 80 nm, bevorzugt von 67 nm bis 70 nm,
- eine optisch niedrigbrechende Schicht auf Basis von Siliziumdioxid mit einer Dicke von 100 nm bis 120 nm, bevorzugt von 120 nm bis 115 nm,
- eine optisch hochbrechende Schicht auf Basis von Siliziumnitrid, Zinn-Zink-Oxid, Silizium-Zirkonium-Nitrid oder Titanoxid, bevorzugt Siliziumnitrid, mit einer Dicke von 60 nm bis 80 nm, bevorzugt von 68 nm bis 71 nm,
- eine optisch niedrigbrechende Schicht auf Basis von Siliziumdioxid mit einer Dicke von 100 nm bis 120 nm, bevorzugt von 107 nm bis 110 nm,
- eine optisch hochbrechende Schicht auf Basis von Siliziumnitrid, Zinn-Zink-Oxid, Silizium-Zirkonium-Nitrid oder Titanoxid, bevorzugt Siliziumnitrid, mit einer Dicke von 30 nm bis 50 nm, bevorzugt von 40 nm bis 43 nm,
- eine optisch niedrigbrechende Schicht auf Basis von Siliziumdioxid mit einer Dicke von 50 nm bis 70 nm, bevorzugt von 60 nm bis 63 nm,
- eine optisch hochbrechende Schicht auf Basis von Siliziumnitrid, Zinn-Zink-Oxid, Silizium-Zirkonium-Nitrid oder Titanoxid, bevorzugt Siliziumnitrid, mit einer Dicke von 200 nm bis 220 nm, bevorzugt von 211 nm bis 214 nm. Die Reflexionsbeschichtung besteht besonders bevorzugt aus den vorstehend genannten Schichten.

In einer ganz besonders vorteilhaften Ausgestaltung, mit der besonders gute Ergebnisse erzielt werden, umfasst die Reflexionsbeschichtung die folgende Schichtenfolge ausgehend vom Substrat, auf dem die Beschichtung abgeschieden ist, folgende Schichten:
- eine optisch hochbrechende Schicht mit einer Dicke von 260 nm bis 280 nm, bevorzugt von 268 nm bis 271 nm,
- eine optisch niedrigbrechende Schicht mit einer Dicke von 110 nm bis 130 nm, bevorzugt von 121 nm bis 124 nm,
- eine optisch hochbrechende Schicht mit einer Dicke von 80 nm bis 100 nm, bevorzugt von 89 nm bis 92 nm,
- eine metallhaltige optisch niedrigbrechende Schicht, insbesondere auf Basis von Silber, mit einer Dicke von 5 nm bis 15 nm, bevorzugt von 8 nm bis 10 nm,
- eine optisch hochbrechende Schicht mit einer Dicke von 230 nm bis 250 nm, bevorzugt von 236 nm bis 239 nm,
- eine optisch niedrigbrechende Schicht mit einer Dicke von 190 nm bis 210 nm, bevorzugt von 197 nm bis 200 nm,
- eine optisch hochbrechende Schicht mit einer Dicke von 120 nm bis 140 nm, bevorzugt von 132 nm bis 136 nm.

Die optisch hochbrechenden Schichten weisen dabei einen Brechungsindex von größer 1,8 auf, die optisch niedrigbrechenden Schichten einen Brechungsindex von kleiner 1,8. Die Reflexionsbeschichtung besteht besonders bevorzugt aus den vorstehend genannten Schichten. Die optisch hochbrechenden und niedrigbrechenden Schichten sind bevorzugt dielektrische Schichten, außer der metallhaltigen optisch niedrigbrechenden Schicht. Bevorzugte Materialien für die optisch hochbrechenden Schichten sind Siliziumnitrid, Zinn-Zink-Oxid, Silizium-Zirkonium-Nitrid, Zirkoniumoxid, Nioboxid, Hafniumoxid, Tantaloxid, Wolframoxid, Titanoxid, Siliziumkarbid oder Diamond-like carbon (DLC). Bevorzugte Materialen für die dielektrischen optisch niedrigbrechenden Schichten sind Siliziumoxid, Aluminiumoxid, Magnesiumfluorit, Siliziumoxinitrid oder Calciumfluorit. Die optisch hochbrechenden beziehungsweise niedrigbrechenden Schichten sind daher bevorzugt auf Basis dieser Materialien ausgebildet.

In einer ganz besonders vorteilhaften Ausgestaltung, mit der besonders gute Ergebnisse erzielt werden, umfasst die Reflexionsbeschichtung die folgende Schichtenfolge ausgehend vom Substrat, auf dem die Beschichtung abgeschieden ist, folgende Schichten:
- eine optisch hochbrechende Schicht auf Basis von Siliziumnitrid, Zinn-Zink-Oxid, Silizium-Zirkonium-Nitrid oder Titanoxid, bevorzugt Siliziumnitrid, mit einer Dicke von 260 nm bis 280 nm, bevorzugt von 268 nm bis 271 nm,
- eine optisch niedrigbrechende Schicht auf Basis von Siliziumdioxid mit einer Dicke von 110 nm bis 130 nm, bevorzugt von 121 nm bis 124 nm,
- eine optisch hochbrechende Schicht auf Basis von Siliziumnitrid, Zinn-Zink-Oxid, Silizium-Zirkonium-Nitrid oder Titanoxid, bevorzugt Siliziumnitrid, mit einer Dicke von 80 nm bis 100 nm, bevorzugt von 89 nm bis 92 nm,
- eine Schicht auf Basis von Silber mit einer Dicke von 5 nm bis 15 nm, bevorzugt von 8 nm bis 10 nm,
- eine optisch hochbrechende Schicht auf Basis von Siliziumnitrid, Zinn-Zink-Oxid, Silizium-Zirkonium-Nitrid oder Titanoxid, bevorzugt Siliziumnitrid, mit einer Dicke von 230 nm bis 250 nm, bevorzugt von 236 nm bis 239 nm,
- eine optisch niedrigbrechende Schicht auf Basis von Siliziumdioxid mit einer Dicke von 190 nm bis 210 nm, bevorzugt von 197 nm bis 200 nm,
- eine optisch hochbrechende Schicht auf Basis von Siliziumnitrid, Zinn-Zink-Oxid, Silizium-Zirkonium-Nitrid oder Titanoxid, bevorzugt Siliziumnitrid, mit einer Dicke von 120 nm bis 140 nm, bevorzugt von 132 nm bis 136 nm. Die Reflexionsbeschichtung besteht besonders bevorzugt aus den vorstehend genannten Schichten.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht. Ist eine erste Schicht oberhalb oder unterhalb einer zweiten Schicht angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird.

Die angegebenen Werte für Brechungsindizes sind bei einer Wellenlänge von 550 nm gemessen.

Die Seitenscheibe, beziehungsweise im Falle einer Verbundscheibe die Außenscheibe und die Innenscheibe, ist bevorzugt aus Glas gefertigt, insbesondere aus Kalk-Natron-Glas, was für Fensterscheiben üblich ist. Die Seitenscheibe, beziehungsweise ihre Einzelscheiben, kann grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Seitenscheibe kann breit variieren. Vorzugsweise werden im Falle einer Verbundscheibe Einzelscheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm. Im Falle einer monolithischen Scheibe sind Dicken von 2 mm bis 5 mm üblich.

Die Seitenscheibe, beziehungsweise einzelne oder sämtliche ihrer Bestandteile, kann klar und farblos, aber auch getönt oder gefärbt sein. Es können nicht vorgespannte, teilvorgespannte oder vorgespannte Gläser verwendet werden. Die Seitenscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Seitenscheibe kann aber auch plan sein, beispielsweise wenn es als Scheibe für Busse, Züge oder Traktoren vorgesehen ist.

Im Falle einer Verbundscheibe enthält die thermoplastische Zwischenschicht zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie ausgebildet. Die Dicke der Zwischenschicht beträgt bevorzugt von 0,2 mm bis 2 mm, besonders bevorzugt von 0,3 mm bis 1 mm.

Der Projektor ist bevorzugt ein LCD-Projektor, insbesondere TFT-Projektor, ein LED-Projektor oder OLED-Projektor. Der Projektor ist insbesondere ein Filmprojektor, also ein Projektor, der geeignet ist, Filme abzuspielen. Der Projektor ist besonders bevorzugt als Dual-Projektor ausgebildet, der geeignet ist, die beiden gegenüberliegenden Seitenscheiben simultan zu bestrahlen.

Die Erfindung umfasst außerdem ein Verfahren zur Herstellung einer erfindungsgemäßen Projektionsanordnung, wobei eine Fahrzeug-Seitenscheibe mit einer Reflexionsbeschichtung versehen wird, die geeignet ist, p-polarisierte Strahlung zu reflektieren, und anschließend ein Projektor, dessen Strahlung überwiegend p-polarisiert ist, auf einen Bereich der Seitenscheibe gerichtet wird in einer definierten relativen Anordnung. Die vorstehend beschriebenen Ausführungen zu bevorzugten Ausgestaltungen gelten entsprechend.

Die Reflexionsbeschichtung wird bevorzugt durch physikalische Gasphasenabscheidung (PVD) aufgebracht, besonders bevorzugt durch Kathodenzerstäubung ("Sputtern"), ganz besonders bevorzugt durch magnetfeldunterstütze Kathodenzerstäubung.

Ist die Seitenscheibe eine Verbundscheibe, so wird die Reflexionsbeschichtung auf die Innenscheibe oder die Außenscheibe aufgebracht oder alternativ auf einer Trägerfolie bereitgestellt. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Eine etwaige Trägerfolie mit Reflexionsbeschichtung wird dabei zwischen zwei thermoplastische Folien der Zwischenschicht eingelegt. Die Verbindung von Außenscheibe und Innenscheibe erfolgt dabei üblicherweise unter Einwirkung von Hitze, Vakuum und/oder Druck.

Soll die Seitenscheibe gebogen sein, so wird sie bevorzugt nach etwaiger Beschichtungsprozesse einem Biegeprozess unterzogen. Im Falle einer Verbundscheibe erfolgt das Biegen der Einzelscheiben bevorzugt vor der Lamination. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

Die Erfindung umfasst außerdem die Verwendung einer Fahrzeug-Seitenscheibe, die mit einer Reflexionsbeschichtung ausgestattet ist, welche zur Reflexion von p-polarisierter Strahlung geeignet ist, als Projektionsfläche für einen Projektor, dessen Strahlung überwiegend p-polarisiert ist. Die Reflexionsbeschichtung umfasst alternierend optisch hochbrechende Schichten mit einem Brechungsindex größer 1,8 und optisch niedrigbrechende Schichten mit einem Brechungsindex kleiner 1,8. Mindestens eine der optisch niedrigbrechenden Schichten ist als elektrisch leitfähige Schicht ausgebildet, während die optisch hochbrechenden Schichten und die übrigen optisch niedrigbrechenden Schichten als dielektrische Schichten ausgebildet sind. Die so realisierte Projektionsanordnung wird bevorzugt zur Darstellung von Entertainment-Inhalten, insbesondere Filmen, für die hinteren Fahrzeuginsassen verwendet. Die vorstehend beschriebenen bevorzugten Ausgestaltungen gelten entsprechend. Die Projektionsanordnung wird bevorzugt in einem Kraftfahrzeug, insbesondere einem Personenkraftwagen oder Lastkraftwagen, eingesetzt, wobei die Seitenscheibe eine hintere Seitenscheibe ist.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine schematische Darstellung einer Ausgestaltung der erfindungsgemäßen Projektionsanordnung,
- Fig. 2: einen Querschnitt durch eine Ausgestaltung einer Fahrzeug-Seitenscheibe als Bestandteil der erfindungsgemäßen Projektionsanordnung,
- Fig. 3: einen Querschnitt durch eine Ausgestaltung der Reflexionsbeschichtung (nicht beansprucht),
- Fig. 4: einen Querschnitt durch eine Ausgestaltung der erfindungsgemäßen Reflexionsbeschichtung,
- Fig. 5: Reflexionsspektren von Verbundscheiben, die mit Beschichtungen der Figuren 3 und 4 ausgestattet sind.

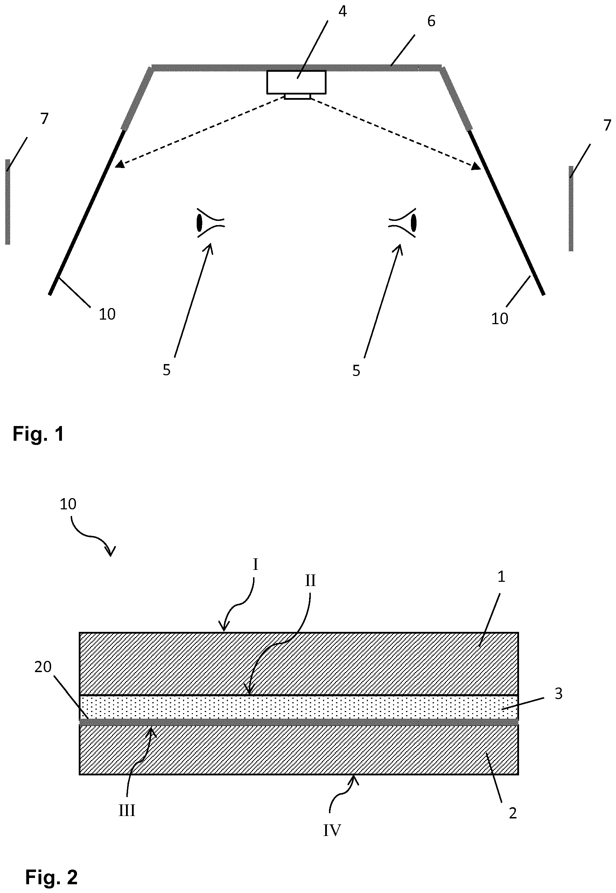

Figur 1 zeigt beispielhaft eine erfindungsgemäße Projektionsanordnung. Die Projektionsanordnung umfasst einen Projektor 4, der im Bereich eines Fahrzeugdachs 6 angebracht ist. Der Projektor ist ein Dual-Filmprojektor, der p-polarisierte Strahlung aussendet (angedeutet durch gestrichelte Pfeile). Die Projektionsanordnung umfasst weiter die beiden hinteren Seitenscheiben 10 des Fahrzeugs, die als Projektionsfläche für den Projektor 4 dienen. Die Seitenscheiben 10 sind mit einer nicht eigens darstellten Reflexionsbeschichtung versehen, welche zur Reflexion der p-polarisierten Strahlung des Projektors 4 geeignet ist. Durch die Reflexion der Strahlung des Projektors 4 an den Seitenscheiben 10 werden virtuelle Bilder 7 erzeugt, welche die Betrachter 5 - die hinteren Fahrzeug-Insassen - auf den von ihnen abgewandten Seiten der Seitenscheiben 10 wahrgenommen werden. Durch den Projektor 4 kann so ein Film dargestellt werden, der gleichsam hinter den Scheiben in der umgebenden Landschaft erscheint.

Der Projektor 4 bestrahlt die Seitenscheiben 10 mit einem Einfallswinkel von beispielsweise etwa 65°, der nahe dem Brewster-Winkel liegt. Daher wird die p-polarisierte Strahlung kaum von den externen Scheibenoberflächen reflektiert. Die Reflexion erfolgt stattdessen nahezu ausschließlich an der Reflexionsbeschichtung als einzige Reflexionsfläche. Geisterbilder, wie sie bei Verwendung von s-polarisierter Strahlung durch die Reflexion an beiden externen Oberflächen der Seitenscheibe 10 hervorgerufen werden würden, können so vermieden werden.

Figur 2 zeigt den Aufbau einer Ausgestaltung der Fahrzeug-Seitenscheibe 10. Die Seitenscheibe 10 ist als Verbundscheibe ausgebildet und ist aufgebaut aus einer Außenscheibe 1 und einer Innenscheibe 2, die über eine thermoplastische Zwischenschicht 3 miteinander verbunden sind. Die Außenscheibe 1 ist in Einbaulage der äußeren Umgebung zugewandt, die Innenscheibe 2 dem Fahrzeuginnenraum. Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Auf der außenseitigen Oberfläche III der Innenscheibe 2 ist eine Reflexionsbeschichtung 20 aufgebracht, die zur Reflexion von p-polarisierter Strahlung geeignet ist. Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke von 1,6 mm. Die Zwischenschicht 3 ist beispielsweise aus einer PVB-Folie ausgebildet mit einer Dicke von 0,76 mm.

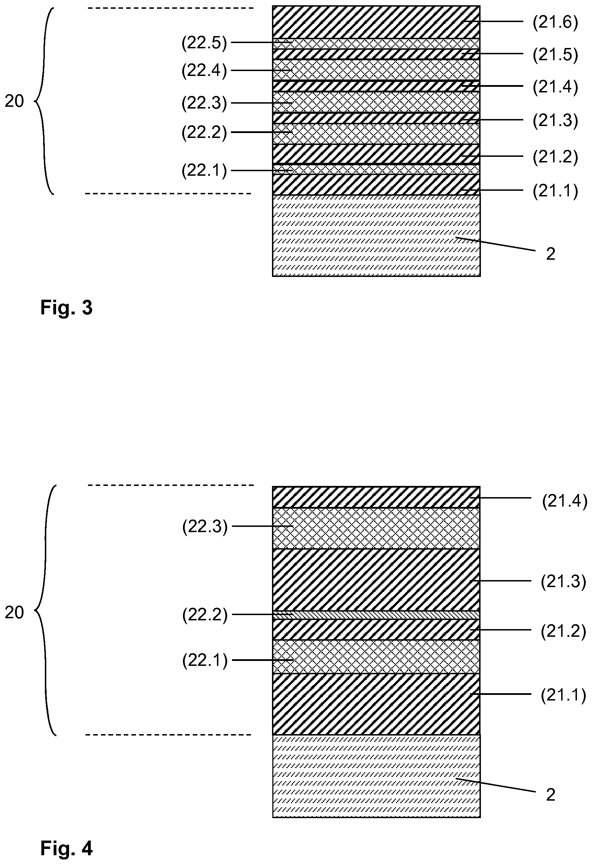

Figur 3 zeigt die Schichtenfolge einer nicht erfindungsgemäßen Reflexionsbeschichtung 20. Die Beschichtung 20 ist ein Stapel von Dünnschichten, wobei insgesamt sechs dielektrische, optisch hochbrechende Schichten 21 (21.1, 21.2, 21.3, 21.4, 21.5, 21.6) und fünf dielektrische, optisch niedrigbrechende Schichten 22 (22.1, 22.2, 22.3, 22.4, 22.5) alternierend auf dem Substrat (Innenscheibe 2) abgeschieden sind. Die optisch hochbrechenden Schichten 21.1, 21.2, 21.3, 21.4, 21.5, 21.6 sind auf Basis von Siliziumnitrid (SiN) mit einem Brechungsindex von 2,04 ausgebildet. Die optisch niedrigbrechenden Schichten 22.1, 22.2, 22.3, 22.4, 22.5 sind auf Basis von Siliziumoxid (SiO) mit einem Brechungsindex von 1,47 ausgebildet.

Die Schichtenabfolge ist schematisch der Figur zu entnehmen. Die Schichtenfolge einer als Verbundscheibe ausgebildeten Seitenscheibe 10 mit der Beschichtung 20 auf der außenseitigen Oberfläche III der Innenscheibe 2 ist außerdem, zusammen mit den Materialien und Schichtdicken der Einzelschichten, in Tabelle 1 dargestellt.

**Tabelle 1**

| Material | Bezugszeichen | | Schichtdicke |
|---|---|---|---|
| Kalk-Natron-Glas | 1 | | 2,1 mm |
| PVB | 3 | | 0,76 mm |
| SiN | | 21.6 | 212,8 nm |
| SiO | | 22.5 | 61,8 nm |
| SiN | | 21.5 | 41,7 nm |
| SiO | | 22.4 | 108,8 nm |
| SiN | | 21.4 | 69,7 nm |
| SiO | 20 | 22.3 | 113,2 nm |
| SiN | | 21.3 | 68,6 nm |
| SiO | | 22.2 | 107,4 nm |
| SiN | | 21.2 | 127,4 nm |
| SiO | | 22.1 | 51,3 nm |
| SiN | | 21.1 | 93,1 nm |
| Kalk-Natron-Glas | 2 | | 1,6 mm |

Figur 4 zeigt die Schichtenfolge einer vorteilhaften Ausgestaltung der erfindungsgemäßen Reflexionsbeschichtung 20. Die Beschichtung 20 ist ein Stapel von Dünnschichten, wobei insgesamt vier dielektrische, optisch hochbrechende Schichten 21 (21.1, 21.2, 21.3, 21.4) und drei optisch niedrigbrechende Schichten 22 (22.1, 22.2, 22.3) alternierend auf dem Substrat (Innenscheibe 2) abgeschieden sind. Die optisch hochbrechenden Schichten 21.1, 21.2, 21.3, 21.4 sind auch hier auf Basis von Siliziumnitrid (SiN) ausgebildet. Die mittlere optisch niedrigbrechende Schicht 22.2 ist als elektrisch leitfähige Schicht auf Basis von Silber (Ag) ausgebildet, während die übrigen optisch niedrigbrechenden Schichten 22.1, 22.3 als dielektrische Schichten auf Basis von Siliziumoxid (SiO) ausgebildet sind.

Die Schichtenabfolge ist schematisch der Figur zu entnehmen. Die Schichtenfolge einer als Verbundscheibe ausgebildeten Seitenscheibe 10 mit der Beschichtung 20 auf der außenseitigen Oberfläche III der Innenscheibe 2 ist außerdem, zusammen mit den Materialien und Schichtdicken der Einzelschichten, in Tabelle 2 dargestellt.

**Tabelle 2**

| Material | Bezugszeichen | | Schichtdicke |
|---|---|---|---|
| Kalk-Natron-Glas | 1 | | 2,1 mm |
| PVB | 3 | | 0,76 mm |
| SiN | 20 | 21.4 | 134,0 nm |
| SiO | | 22.3 | 198,1 nm |
| SiN | | 21.3 | 237,8 nm |
| Ag | | 22.2 | 9,1 nm |
| SiN | | 21.2 | 90,4 nm |
| SiO | | 22.1 | 122,1 nm |
| SiN | | 21.1 | 269,7 nm |
| Kalk-Natron-Glas | 2 | | 1,6 mm |

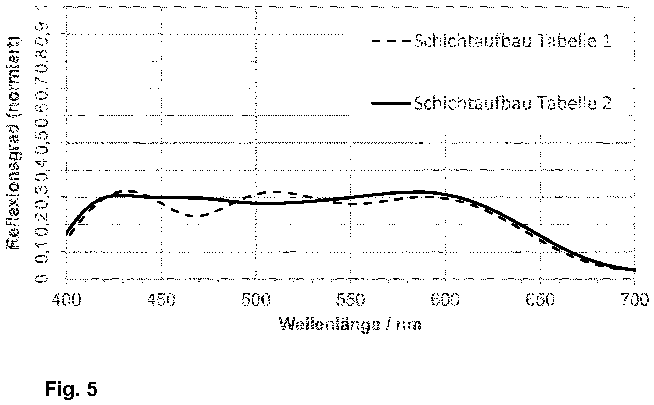

Figur 5 zeigt Reflexionsspektren einer Verbundscheibe 10 wie in Figur 2, jeweils mit einem Schichtaufbau gemäß Tabelle 1 und Tabelle 2. Das Reflexionsspektrum wurde mit einer Lichtquelle, die im betrachteten Spektralbereich p-polarisierte Strahlung gleichmäßiger Intensität ausstrahlt, aufgenommen, bei Bestrahlung über die Innenscheibe (die sogenannte innenraumseitige Reflexion) unter einem Einstrahlwinkel von 65° zur innenraumseitigen Flächennormalen. Die Reflexionsmessung ist also der Situation in der Projektionsanordnung angenähert.

Der rein dielektrische Schichtaufbau gemäß Tabelle 1 führt im Spektralbereich von 400 nm bis 650 nm zu einem gemittelten Reflexionsgrad von 27 %, der Schichtaufbau mit der Silberschicht gemäß Tabelle 2 zu einem gemittelten Reflexionsgrad von 27 %. Beide Reflexionsbeschichtungen 20 sind also geeignet, im Spektralbereich typischer Filmprojektoren deren p-polarisierte Strahlung wirksam zu reflektieren und somit das gewünschte Projektionsbild zu erzeugen.

Es ist zu erkennen, dass die Silberschicht der Reflexionsbeschichtung gemäß Tabelle 2 zu einer deutlichen Glättung des Reflexionsspektrums führt. Im Spektralbereich von 450 nm bis 600 nm beträgt der Mittelwert für den dielektrischen Schichtaufbau gemäß Tabelle 1 28 %, das Minimum 23% und das Maximum 32%. Die Differenz zwischen dem maximal auftretenden Reflexionsgrad und dem Mittelwert beträgt also 4%, die Differenz zwischen dem minimal auftretenden Reflexionsgrad und dem Mittelwert 5 %. Dagegen beträgt der Mittelwert für den Schichtaufbau gemäß Tabelle 2 30%, das Minimum 28% und das Maximum 32%. %. Die Differenz zwischen dem maximal auftretenden Reflexionsgrad und dem Mittelwert beträgt also 2%, die Differenz zwischen dem minimal auftretenden Reflexionsgrad und dem Mittelwert ebenfalls 2 %. Im Spektralbereich von 420 nm bis 600 nm beträgt der Mittelwert für den dielektrischen Schichtaufbau gemäß Tabelle 1 29 %, das Minimum 23% und das Maximum 32%. Die Differenz zwischen dem maximal auftretenden Reflexionsgrad und dem Mittelwert beträgt also 3%, die Differenz zwischen dem minimal auftretenden Reflexionsgrad und dem Mittelwert 6 %. Dagegen beträgt der Mittelwert für den Schichtaufbau gemäß Tabelle 2 30%, das Minimum 28% und das Maximum 32%. %. Die Differenz zwischen dem maximal auftretenden Reflexionsgrad und dem Mittelwert beträgt also 2%, die Differenz zwischen dem minimal auftretenden Reflexionsgrad und dem Mittelwert ebenfalls 2 %. Die Glättung des Reflexionsspektrums durch die Silberschicht führt zu einer farbneutraleren Widergabe des Projektorbildes.

In Tabelle 3 sind einige optische Werte der beschichteten Seitenscheiben angegeben, die dem Fachmann geläufig sind und üblicherweise zur Charakterisierung von Fahrzeugscheiben herangezogen werden. Dabei stehen RL für die integrierte Lichtreflexion und TL für die integrierte Lichttransmission (nach ISO 9050). Die Angabe nach RL beziehungsweise TL gibt die verwendete Lichtquelle an, wobei A für die Lichtquelle A steht und HUD für einen HUD-Projektor mit Strahlungswellenlängen von 473 nm, 550 nm und 630 nm (RGB), der hier als beispielhaftes Model für einen Filmprojektor herangezogen wurde. Die Winkelangabe nach der Lichtart gibt den Einfallswinkel der Strahlung zur außenseitigen Flächennormalen an. Einfallswinkel kleiner 90° geben also eine außenseitige Bestrahlung an und Einfallswinkel größer 90° eine innenraumseitige Bestrahlung. Der angegebene Einfallswinkel von 115° entspricht einem Einfallswinkel zur innenraumseitigen Flächennormalen von 65° (=180°-115°) und simuliert die Bestrahlung mit dem erfindungsgemäßen Projektor. Bei der Bestimmung der integralen Reflexionswerte RL beträgt der Beobachtungswinkel 2°. Unterhalb der Reflexionswerte sind jeweils die zugehörigen Farbwerte a* und b* im L*a*b*-Farbraum, gefolgt von der Angabe der verwendeten Lichtquelle (Lichtquelle D65 und HUD-Projektor) und der Angabe des Beobachtungswinkels (Winkel, unter dem der Lichtstrahl ins Auge auf die Netzhaut trifft).

TTS ISO 13837 steht für die insgesamt eingestrahlte Sonnenenergie, gemessen nach ISO 13837, und ist ein Maß für den thermischen Komfort.

Die Scheiben weisen eine relativ geringe Lichttransmission auf und einen deutlichen Farbstich bei außenseitiger Reflexion. Dies spielt bei hinteren Seitenscheiben eine untergeordnete Rolle, weil hier die Anforderungen an Transmission und Farbneutralität weniger ausgeprägt sind als im Falle von Windschutzscheiben und vorderen Seitenscheiben. Für das dargestellte Projektorbild (RL HUD p-pol. 115°) werden gute Reflexionswerte und eine gute Farbneutralität erreicht. Der TTS-Wert ist für beide Beschichtungen vorteilhaft gering, wobei mit dem Schichtaufbau nach Tabelle 2 infolge der Silberschicht trotz einer geringeren Gesamtzahl an Schichten eine weitere Reduzierung der eingestrahlten Sonnenenergie erreicht werden konnte.

**Tabelle 3**

| | | Schichtaufbau Tabelle 1 | Schichtaufbau Tabelle 2 |
|---|---|---|---|
| RLA 8°/ % | | 58,3 | 40,2 |
| | a* (D65 / 10°) | -5,6 | -15,9 |
| | b* (D65 / 10°) | 36,4 | 22,3 |
| RL A60° / % | | 53,5 | 43,0 |
| | a* (D65 / 10°) | -4,2 | 0,4 |
| | b* (D65 / 10°) | 3,1 | -0,5 |
| RL HUD p-pol. 115° / % | | 28,7 | 29,7 |
| | a* (HUD / 10°) | -3,5 | -0,4 |
| | b* (HUD / 10°) | 1,5 | -0,1 |
| TL A 0° / % | | 38,7 | 56,1 |
| TTS ISO 13837 / % | | 57,3 | 55,7 |

### Bezugszeichenliste:

(10) Fahrzeug-Seitenscheibe
(1) Außenscheibe
(2) Innenscheibe
(3) thermoplastische Zwischenschicht
(4) Projektor
(5) Betrachter
(6) Fahrzeugdach
(7) virtuelles Bild
(20) Reflexionsbeschichtung
(21) optisch hochbrechende Schicht
(21.1), (21.2), (21.3), (21.4), (21.5), (21.6) 1., 2., 3., 4., 5., 6. optisch hochbrechende Schicht
(22) optisch niedrigbrechende Schicht
(22.1), (22.2), (22.3), (22.4), (22.5) 1., 2., 3., 4., 5. optisch niedrigbrechende Schicht
(I) außenseitige, von der Zwischenschicht 3 abgewandte Oberfläche der Außenscheibe 1
(II) innenraumseitige, zur Zwischenschicht 3 hingewandte Oberfläche der Außenscheibe 1
(III) außenseitige, zur Zwischenschicht 3 hingewandte Oberfläche der Innenscheibe 2
(IV) innenraumseitige, von der Zwischenschicht 3 abgewandte Oberfläche der Innenscheibe 2

## Patentansprüche

1. Projektionsanordnung für ein Fahrzeug, mindestens umfassend
- eine Fahrzeugscheibe, die mit einer Reflexionsbeschichtung (20) ausgestattet ist, und
- einen Projektor (4), der auf einen Bereich der Fahrzeugscheibe gerichtet ist,
wobei die Strahlung des Projektors (4) überwiegend p-polarisiert ist und wobei die Reflexionsbeschichtung (20) geeignet ist, p-polarisierte Strahlung zu reflektieren,
und wobei die Reflexionsbeschichtung (20) alternierend optisch hochbrechende Schichten (21) mit einem Brechungsindex größer 1,8 und optisch niedrigbrechende Schichten (22) mit einem Brechungsindex kleiner 1,8 umfasst,
**dadurch gekennzeichnet, dass**
- die Fahrzeugscheibe eine Fahrzeug-Seitenscheibe (10) ist und
- mindestens eine der optisch niedrigbrechenden Schichten (22.2) als elektrisch leitfähige Schicht ausgebildet ist, während die optisch hochbrechenden Schichten (21) und die übrigen optisch niedrigbrechenden Schichten (22.1, 22.3) als dielektrische Schichten ausgebildet sind.

2. Projektionsanordnung nach Anspruch 1, wobei die Fahrzeug-Seitenscheibe (10) mit der Reflexionsbeschichtung (20) im Spektralbereich von 400 nm bis 650 nm einen gemittelten Reflexionsgrad gegenüber p-polarisierter Strahlung von mindestens 15% aufweist, bevorzugt von mindestens 20%, besonders bevorzugt von mindestens 25%.

3. Projektionsanordnung nach Anspruch 2, wobei im Spektralbereich von 450 nm bis 600 nm die Differenz zwischen dem maximal auftretenden Reflexionsgrad und dem Mittelwert sowie die Differenz zwischen dem minimal auftretenden Reflexionsgrad und dem Mittelwert höchstens 3 % beträgt.

4. Projektionsanordnung nach einem der Ansprüche 1 bis 3, wobei die Strahlung des Projektors (4) im Wesentlichen rein p-polarisiert ist.

5. Projektionsanordnung nach einem der Ansprüche 1 bis 4, wobei die Strahlung des Projektors (4) mit einem Einfallswinkel von 45° bis 70° auf die Fahrzeug-Seitenscheibe (10) trifft.

6. Projektionsanordnung nach einem der Ansprüche 1 bis 5, wobei die dielektrischen optisch hochbrechenden Schichten (21) auf Basis von Siliziumnitrid, Zinn-Zink-Oxid, Silizium-Zirkonium-Nitrid oder Titanoxid ausgebildet sind und wobei die dielektrischen optisch niedrigbrechenden Schichten (22) auf Basis von Siliziumoxid ausgebildet sind.

7. Projektionsanordnung nach einem der Ansprüche 1 bis 6, wobei die elektrisch leitfähige Schicht auf Basis von Silber ausgebildet ist.

8. Projektionsanordnung nach einem der Ansprüche 1 bis 7, wobei die Reflexionsbeschichtung (20) folgende Schichten umfasst:
- eine optisch hochbrechende Schicht (21.1) auf Basis von Siliziumnitrid, Zinn-Zink-Oxid, Silizium-Zirkonium-Nitrid oder Titanoxid, bevorzugt Siliziumnitrid, mit einer Dicke von 260 nm bis 280 nm, bevorzugt von 268 nm bis 271 nm,
- darüber eine optisch niedrigbrechende Schicht (22.1) auf Basis von Siliziumdioxid mit einer Dicke von 110 nm bis 130 nm, bevorzugt von 121 nm bis 124 nm,
- darüber eine optisch hochbrechende Schicht (21.2) auf Basis von Siliziumnitrid, Zinn-Zink-Oxid, Silizium-Zirkonium-Nitrid oder Titanoxid, bevorzugt Siliziumnitrid, mit einer Dicke von 80 nm bis 100 nm, bevorzugt von 89 nm bis 92 nm,
- darüber eine optisch niedrigbrechende Schicht (22.2) auf Basis von Silber mit einer Dicke von 5 nm bis 15 nm, bevorzugt von 8 nm bis 10 nm,
- darüber eine optisch hochbrechende Schicht (21.3) auf Basis von Siliziumnitrid, Zinn-Zink-Oxid, Silizium-Zirkonium-Nitrid oder Titanoxid, bevorzugt Siliziumnitrid, mit einer Dicke von 230 nm bis 250 nm, bevorzugt von 236 nm bis 239 nm,
- darüber eine optisch niedrigbrechende Schicht (22.3) auf Basis von Siliziumdioxid mit einer Dicke von 190 nm bis 210 nm, bevorzugt von 197 nm bis 200 nm,
- darüber eine optisch hochbrechende Schicht (21.4) auf Basis von Siliziumnitrid, Zinn-Zink-Oxid, Silizium-Zirkonium-Nitrid oder Titanoxid, bevorzugt Siliziumnitrid, mit einer Dicke von 120 nm bis 140 nm, bevorzugt von 132 nm bis 136 nm.

9. Projektionsanordnung nach einem der Ansprüche 1 bis 8, wobei die Fahrzeug-Seitenscheibe (10) als Verbundscheibe ausgestaltet ist, umfassend eine Außenscheibe (1) und eine Innenscheibe (2), die über eine thermoplastische Zwischenschicht (3) miteinander verbunden sind, und wobei die Reflexionsbeschichtung (20) auf der zur Zwischenschicht (3) hingewandten Oberfläche (II, III) der Außenscheibe (1) oder der Innenscheibe (2) oder innerhalb der Zwischenschicht (3) angeordnet ist.

10. Projektionsanordnung nach Anspruch 9, wobei die externen Oberflächen (I, IV) der Fahrzeug-Seitenscheibe (10) im Wesentlichen parallel zueinander angeordnet sind.

11. Verwendung einer Fahrzeug-Seitenscheibe (10), die mit einer Reflexionsbeschichtung (20) ausgestattet ist, welche zur Reflexion von p-polarisierter Strahlung geeignet ist, als Projektionsfläche für einen Projektor (4), dessen Strahlung überwiegend p-polarisiert ist, wobei die Reflexionsbeschichtung (20) alternierend optisch hochbrechende Schichten (21) mit einem Brechungsindex größer 1,8 und optisch niedrigbrechende Schichten (22) mit einem Brechungsindex kleiner 1,8 umfasst, und wobei mindestens eine der optisch niedrigbrechenden Schichten (22.2) als elektrisch leitfähige Schicht ausgebildet ist, während die optisch hochbrechenden Schichten (21) und die übrigen optisch niedrigbrechenden Schichten (22.1, 22.3) als dielektrische Schichten ausgebildet sind.

12. Verwendung nach Anspruch 11, wobei mit dem Projektor (4) Entertainment-Inhalte, insbesondere Filme, für die hinteren Fahrzeuginsassen dargestellt werden.

## Claims

1. Projection arrangement for a vehicle, at least comprising
- a vehicle window provided with a reflective coating (20), and
- a projector (4) directed at a region of the vehicle window,
wherein the radiation of the projector (4) is predominantly p-polarised and the reflective coating (20) is suitable for reflecting p-polarised radiation,
and wherein the reflective coating (20) alternately comprises optically high-refractive layers (21) with a refractive index greater than 1.8 and optically low-refractive layers (22) with a refractive index less than 1.8,
**characterised in that**
- the vehicle window is a vehicle side window (10) and
- at least one of the optically low-refractive layers (22.2) is designed as an electrically conductive layer, while the optically high-refractive layers (21) and the remaining optically low-refractive layers (22.1, 22.3) are designed as dielectric layers.

2. Projection arrangement according to claim 1, wherein the vehicle side window (10) having the reflective coating (20), in the spectral range from 400 nm to 650 nm, has an average reflectance with respect to p-polarised radiation of at least 15%, preferably at least 20%, particularly preferably at least 25%.

3. Projection arrangement according to claim 2, wherein in the spectral range from 450 nm to 600 nm, the difference between the maximum reflectance and the mean value of the reflectance as well as the difference between the minimum reflectance and the mean value of the reflectance is at most 3%.

4. Projection arrangement according to any of claims 1 to 3, wherein the radiation of the projector (4) is substantially purely p-polarised.

5. Projection arrangement according to any of claims 1 to 4, wherein the radiation of the projector (4) strikes the vehicle side window (10) at an angle of incidence of 45° to 70°.

6. Projection arrangement according to any of claims 1 to 5, wherein the dielectric optically high-refractive layers (21) are formed based on silicon nitride, tin-zinc oxide, silicon-zirconium nitride or titanium oxide and wherein the dielectric optically low-refractive layers (22) are formed based on silicon oxide.

7. Projection arrangement according to any of claims 1 to 6, wherein the electrically conductive layer is formed based on silver.

8. Projection arrangement according to any of claims 1 to 7, wherein the reflective coating (20) comprises the following layers:
- an optically high-refractive layer (21.1) based on silicon nitride, tin-zinc oxide, silicon-zirconium nitride or titanium oxide, preferably silicon nitride, having a thickness of 260 nm to 280 nm, preferably of 268 nm to 271 nm,
- thereupon, an optically low-refractive layer (22.1) based onsilicon dioxide, having a thickness of 110 nm to 130 nm, preferably of 121 nm to 124 nm,
- thereupon, an optically high-refractive layer (21.2) based onsilicon nitride, tin-zinc oxide, silicon-zirconium nitride or titanium oxide, preferably silicon nitride, having a thickness of 80 nm to 100 nm, preferably of 89 nm to 92 nm,
- thereupon, an optically low-refractive layer (22.2) based onsilver, having a thickness of 5 nm to 15 nm, preferably of 8 nm to 10 nm,
- thereupon, an optically high-refractive layer (21.3) based onsilicon nitride, tin-zinc oxide, silicon-zirconium nitride or titanium oxide, preferably silicon nitride, having a thickness of 230 nm to 250 nm, preferably of 236 nm to 239 nm,
- thereupon, an optically low-refractive layer (22.3) based onsilicon dioxide, having a thickness of 190 nm to 210 nm, preferably of 197 nm to 200 nm,
- thereupon, an optically high-refractive layer (21.4) based onsilicon nitride, tin-zinc oxide, silicon-zirconium nitride or titanium oxide, preferably silicon nitride, having a thickness of 120 nm to 140 nm, preferably of 132 nm to 136 nm.

9. Projection arrangement according to any of claims 1 to 8, wherein the vehicle side window (10) is designed as a composite pane, comprising an outer pane (1) and an inner pane (2) which are connected to one another via a thermoplastic intermediate layer (3), and wherein the reflective coating (20) is arranged on the surface (II, III) of the outer pane (1) or the inner pane (2) that faces the intermediate layer (3) or within the intermediate layer (3).

10. Projection arrangement according to claim 9, wherein the external surfaces (I, IV) of the vehicle side window (10) are arranged substantially in parallel with one another.

11. Use of a vehicle side window (10) which is provided with a reflective coating (20) which is suitable for reflecting p-polarised radiation, as a projection surface for a projector (4) of which the radiation is predominantly p-polarised, wherein the reflective coating (20) alternately comprises optically high-refractive layers (21) with a refractive index greater than 1.8 and optically low-refractive layers (22) with a refractive index less than 1.8, and wherein at least one of the optically low-refractive layers (22.2) is designed as an electrically conductive layer, while the optically high-refractive layers (21) and the remaining optically low-refractive layers (22.1, 22.3) are designed as dielectric layers.

12. Use according to claim 11, wherein the projector (4) is used to display entertainment content, in particular films, for the rear vehicle occupants.

## Revendications

1. Agencement de projection pour un véhicule, comprenant au moins
- une vitre de véhicule qui est équipée d'un revêtement réfléchissant (20), et
- un projecteur (4) qui est dirigé vers une zone de la vitre de véhicule,
dans lequel le rayonnement du projecteur (4) est principalement polarisé p et dans lequel le revêtement réfléchissant (20) est adapté pour réfléchir le rayonnement polarisé p,
et dans lequel le revêtement réfléchissant (20) comprend en alternance des couches à haute réfraction optique (21) comportant un indice de réfraction supérieur à 1,8 et des couches à faible réfraction optique (22) comportant un indice de réfraction inférieur à 1,8,
**caractérisé en ce que**
- la vitre de véhicule est une vitre latérale de véhicule (10) et
- au moins l'une des couches à faible réfraction optique (22.2) est réalisée en tant que couche électriquement conductrice, tandis que les couches à haute réfraction optique (21) et les autres couches à faible réfraction optique (22.1, 22.3) sont réalisées en tant que couches diélectriques.

2. Agencement de projection selon la revendication 1, dans lequel la vitre latérale de véhicule (10) comportant le revêtement réfléchissant (20) présente, dans le domaine spectral allant de 400 nm à 650 nm, un facteur de réflexion moyen d'au moins 15 %, de préférence d'au moins 20 %, de manière particulièrement préférée d'au moins 25 %, par rapport au rayonnement polarisé p.

3. Agencement de projection selon la revendication 2, dans lequel, dans le domaine spectral allant de 450 nm à 600 nm, la différence entre le facteur de réflexion sortant maximal et la valeur moyenne, ainsi que la différence entre le facteur de réflexion sortant minimal et la valeur moyenne, sont de 3 % au maximum.

4. Agencement de projection selon l'une des revendications 1 à 3, dans lequel le rayonnement du projecteur (4) est sensiblement purement polarisé p.

5. Agencement de projection selon l'une des revendications 1 à 4, dans lequel le rayonnement du projecteur (4) frappe la vitre latérale de véhicule (10) à un angle d'incidence allant de 45° à 70°.

6. Agencement de projection selon l'une des revendications 1 à 5, dans lequel les couches diélectriques à haute réfraction optique (21) sont réalisées à base de nitrure de silicium, oxyde d'étain-zinc, nitrure de silicium-zirconium ou oxyde de titane, et dans lequel les couches diélectriques à faible réfraction optique (22) sont réalisées à base d'oxyde de silicium.

7. Agencement de projection selon l'une des revendications 1 à 6, dans lequel la couche électriquement conductrice est réalisée à base d'argent.

8. Agencement de projection selon l'une des revendications 1 à 7, dans lequel le revêtement réfléchissant (20) comprend les couches suivantes :
- une couche à haute réfraction optique (21.1) à base de nitrure de silicium, oxyde d'étain-zinc, nitrure de silicium-zirconium ou oxyde de titane, de préférence de nitrure de silicium, comportant une épaisseur allant de 260 nm à 280 nm, de préférence de 268 nm à 271 nm,
- par-dessus, une couche à faible réfraction optique (22.1) à base de dioxyde de silicium comportant une épaisseur allant de 110 nm à 130 nm, de préférence de 121 nm à 124 nm,
- par-dessus, une couche à haute réfraction optique (21.2) à base de nitrure de silicium, oxyde d'étain-zinc, nitrure de silicium-zirconium ou oxyde de titane, de préférence de nitrure de silicium, comportant une épaisseur allant de 80 nm à 100 nm, de préférence de 89 nm à 92 nm,
- par-dessus, une couche à faible réfraction optique (22.2) à base d'argent comportant une épaisseur allant de 5 nm à 15 nm, de préférence de 8 nm à 10 nm,
- par-dessus, une couche à haute réfraction optique (21.3) à base de nitrure de silicium, oxyde d'étain-zinc, nitrure de silicium-zirconium ou oxyde de titane, de préférence de nitrure de silicium, comportant une épaisseur allant de 230 nm à 250 nm, de préférence de 236 nm à 239 nm,
- par-dessus, une couche à faible réfraction optique (22.3) à base de dioxyde de silicium comportant une épaisseur allant de 190 nm à 210 nm, de préférence de 197 nm à 200 nm,
- par-dessus, une couche à haute réfraction optique (21.4) à base de nitrure de silicium, oxyde d'étain-zinc, nitrure de silicium-zirconium ou oxyde de titane, de préférence de nitrure de silicium, comportant une épaisseur allant de 120 nm à 140 nm, de préférence de 132 nm à 136 nm.

9. Agencement de projection selon l'une des revendications 1 à 8, dans lequel la vitre latérale de véhicule (10) est conçue comme un verre feuilleté, comprenant une vitre extérieure (1) et une vitre intérieure (2) qui sont reliées l'une à l'autre par l'intermédiaire d'une couche intermédiaire (3) thermoplastique, et dans lequel le revêtement réfléchissant (20) est disposé sur la surface (II, III), tournée vers la couche intermédiaire (3), de la vitre extérieure (1) ou de la vitre intérieure (2), ou est disposé à l'intérieur de la couche intermédiaire (3).

10. Agencement de projection selon la revendication 9, dans lequel les surfaces (I, IV) externes de la vitre latérale de véhicule (10) sont disposées sensiblement parallèlement l'une à l'autre.

11. Utilisation d'une vitre latérale de véhicule (10) qui est équipée d'un revêtement réfléchissant (20), lequel est approprié pour réfléchir un rayonnement polarisé p, comme surface de projection pour un projecteur (4), dont le rayonnement est principalement polarisé p, dans laquelle le revêtement réfléchissant (20) comprend en alternance des couches à haute réfraction optique (21) comportant un indice de réfraction supérieur à 1,8 et des couches à faible réfraction optique (22) comportant un indice de réfraction inférieur à 1,8, et dans laquelle au moins l'une des couches à faible réfraction optique (22.2) est réalisée en tant que couche électriquement conductrice, tandis que les couches à haute réfraction optique (21) et les autres couches à faible réfraction optique (22.1, 22.3) sont réalisées sous forme de couches diélectriques.

12. Utilisation selon la revendication 11, dans laquelle des contenus de divertissement, en particulier des films, pour les occupants arrière du véhicule sont représentés au moyen du projecteur (4).
